(19) Europäisches Patentamt

European Patent Office

Office européen des brevets

(11) **EP 4 349 629 A1**

(12) # EUROPEAN PATENT APPLICATION
published in accordance with Art. 153(4) EPC

(43) Date of publication:
**10.04.2024 Bulletin 2024/15**

(21) Application number: **22811289.2**

(22) Date of filing: **23.05.2022**

(51) International Patent Classification (IPC):
***B60K 15/04*** *(2006.01)*

(52) Cooperative Patent Classification (CPC):
(C-Sets available)
**C08K 3/04; C08F 214/265; C08K 2201/001** (Cont.)

(86) International application number:
**PCT/JP2022/021116**

(87) International publication number:
**WO 2022/250019 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.05.2021 US 202117333234**

(71) Applicant: **AGC INC.**
**Chiyoda-ku,**
**Tokyo 1008405 (JP)**

(72) Inventors:
 • **NISHI, Eiichi**
  **Tokyo 100-8405 (JP)**

 • **SPRICK, Katherine**
  **Exton, Pennsylvania 19341 (US)**
 • **GRZYBOWSKI, Thomas**
  **Troy, Michigan 48083 (US)**
 • **GRYPINICH, Pierre**
  **Troy, Michigan 48083 (US)**
 • **PRIESTLEY-DUNN, Jacquelyn**
  **Brighton, Michigan 48116 (US)**
 • **MELVILLE, Marc**
  **Brighton, Michigan 48116 (US)**
 • **SWARTHOUT, Ronnie**
  **Brighton, Michigan 48116 (US)**

(74) Representative: **Müller-Boré & Partner**
 **Patentanwälte PartG mbB**
 **Friedenheimer Brücke 21**
 **80639 München (DE)**

(54) **FUEL FILLER PIPE**

(57)     Provided is a fuel filler pipe including: an inner layer that contains a fluorine-containing copolymer having a carbonyl group-containing group and having a melting point of 250 °C or lower; an intermediate layer that contains a non-fluorine copolymer having a unit based on ethylene and a unit based on vinyl alcohol; and an outer layer that contains a polyolefin, wherein the inner layer, the intermediate layer, and the outer layer are directly laminated in that order, and the outer layer is a layer that contains a polyolefin having a unit based on an acid anhydride or is a layer in which a layer that contains a polyolefin having a unit based on an acid anhydride and a layer that contains a polyolefin having no unit based on an acid anhydride are directly laminated.

**(Cont. next page)**

EP 4 349 629 A1

(52) Cooperative Patent Classification (CPC): (Cont.)

C-Sets
**C08K 3/04, C08L 27/18;**
C08F 214/265, C08F 214/182, C08F 210/02,
C08F 222/02

**Description**

TECHNICAL FIELD

The present invention relates to a fuel filler pipe.

BACKGROUND ART

A fuel filler pipe is used to transfer a fuel from-the fuel filler opening to the gas tank. In recent years, from the viewpoint of saving gasoline consumption and improving performance of an engine, oxygen-containing gasoline blended with alcohols having a low boiling point such as methanol or ethanol or ethers such as ethyl-t-butyl ether (ETBE) has come to be used as a fuel.

Currently, from the viewpoint of preventing environmental pollution, strict exhaust gas regulations are being implemented, including prevention of leakage into the atmosphere due to diffusion of volatile hydrocarbons through a fuel filler pipe partition wall. In the future, there is a possibility that stricter legal regulations may be imposed and it may be required to further suppress the fuel that permeates through a partition wall of a fuel filler pipe and evaporates.

A single-layer tube which is conventionally used, in which a polyethylene-based resin or a polyamide-based resin, particularly, polyamide 11, polyamide 12, polyamide 612, polyamide 1010, or polyamide 1012 alone is used, and which has excellent strength, toughness, chemical resistance, and flexibility, does not have a sufficient permeation prevention property against oxygen-containing gasoline, and in particular, the permeation prevention property against gasoline blended with alcohol needs to be improved.

United States Patent No. 8133561 describes a multilayer composite including an inner layer selected from the group consisting of a fluororesin molding composition and a polyolefin molding composition, an adhesive layer containing a polyamide, and a barrier layer containing an ethylene-vinyl alcohol copolymer (EVOH) molding composition, and a fuel line using the multilayer composite.

DISCLOSURE OF INVENTION

TECHNICAL PROBLEM

In the case of using a polyamide-based adhesive as the adhesive layer between the barrier layer containing the EVOH molding composition and an inner layer of the fluororesin molding composition, a problem may occur. For example, the fuel may permeate an inner layer, an oligomer, a monomer, and a plasticizer of a compound contained in a polyamide-based adhesive may be eluted into the fuel, and a filter in front of the engine may become clogged. When the filter in front of the engine is clogged, fuel supply to an engine will be cut off.

An object of the present invention is to provide a fuel filler pipe having an excellent fuel shielding property, excellent resistance to heat aging, excellent interlayer adhesion, and excellent conductivity.

SOLUTION TO PROBLEM

(1) According to an aspect of the present invention, there is provided a fuel filler pipe including: an inner layer that contains a fluorine-containing copolymer having a unit based on tetrafluoroethylene and a unit based on ethylene, having a carbonyl group-containing group, and having a melting point of 250 °C or lower; an intermediate layer that contains a non-fluorine copolymer having a unit based on ethylene and a unit based on vinyl alcohol; and an outer layer that contains polyolefin, in which the inner layer, the intermediate layer, and the outer layer are directly laminated in that order, and the outer layer is a layer that contains a polyolefin having a unit based on an acid anhydride or is a layer in which a layer that contains a polyolefin having a unit based on an acid anhydride and a layer that contains polyolefin having no unit based on an acid anhydride are directly laminated.

(2) In the fuel filler pipe according to another aspect, the carbonyl group-containing group contained in the fluorine-containing copolymer is a carbonyl group-containing group derived from a unit based on a monomer having a carbonyl group-containing group.

(3) In the fuel filler pipe according to another aspect, the carbonyl group-containing group contained in the fluorine-containing copolymer is an acid anhydride group derived from a unit based on a monomer having an acid anhydride group.

(4) In the fuel filler pipe according to another aspect, the fluorine-containing copolymer is contained in an amount of 80% to 100% by mass with respect to a total mass of the inner layer, the non-fluorine copolymer is contained in an amount of 80% to 100% by mass with respect to a total mass of the intermediate layer, and the polyolefin is contained in an amount of 80% to 100% by mass with respect to a total mass of the outer layer.

(5) In the fuel filler pipe according to another aspect, the inner layer contains a conductive filler.

(6) In the aspect according to (5), a surface resistivity of the inner layer may be $10^5$ $\Omega$/sq. or lower.

(7) In the fuel filler pipe according to another aspect, a surface resistivity of the inner layer is $10^5$ $\Omega$/sq. or lower.

(8) In the fuel filler pipe according to another aspect, in the intermediate layer, the non-fluorine copolymer contains 25 to 50 mol% of a unit based on ethylene with respect to a total unit forming the non-fluorine copolymer.

(9) In the fuel filler pipe according to another aspect, in the intermediate layer, the unit based on vinyl alcohol forming the non-fluorine copolymer is obtained by saponifying 99% or more of a unit based on vinyl acetate.

(10) In the fuel filler pipe according to another aspect, a total thickness of the inner layer, the intermediate layer, and the outer layer is 1.0 to 20.0 mm.

(11) In the aspect according to (10), a thickness of the inner layer may be 10% to 30% of a thickness of the outer layer.

(12) In the aspect according to (11), a thickness of the intermediate layer may be 10% to 30% of the thickness of the outer layer.

(13) In the fuel filler pipe according to another aspect, an ester bond is present at both a first interface between the inner layer and the intermediate layer and a second interface between the intermediate layer and the outer layer.

(14) In the aspect according to (13), the ester bond may be an ester bond formed from an acid anhydride group and a hydroxy group.

(15) In the fuel filler pipe according to another aspect, a peel strength is 30 N/cm or greater at both a first interface between the inner layer and the intermediate layer and a second interface between the intermediate layer and the outer layer.

(16) In the fuel filler pipe according to another aspect, a fuel permeability coefficient of the inner layer determined using CE10 at 60 °C, which is a test fuel of isooctane:toluene:ethanol (volume ratio) = 45:45:10 by a cup method below, is 6.0 g·mm/(m²·24 hr) or less.

(Cup method)

A test piece having a thickness of 100 $\mu$m is prepared. In accordance with the cup method specified in JIS Z 0208-1976, 4.6 g of a specified test fuel is placed in a cup having a permeation area of 11.33 cm², an upper part of the cup is covered with the test piece, loss in mass after being kept at 60 °C for 10 days is recorded, and the fuel permeability coefficient of a polymer is determined using Equation below.

$$\text{Fuel permeability coefficient} = \text{loss in mass (g)} \times \text{thickness of test piece}$$

$$\text{(mm)/(permeation area (m}^2\text{)} \times \text{number of permeation days).}$$

(17) In the fuel filler pipe according to another aspect, a surface resistivity of the inner layer after enclosing the CE10 and exposing it to a temperature of 40 °C for 1000 hours is $10^5$ $\Omega$/sq. or lower.

(18) In the fuel filler pipe according to another aspect, a peel strength is 40 N/cm or greater at both a first interface between the inner layer and the intermediate layer and a second interface between the intermediate layer and the outer layer.

(19) In the fuel filler pipe according to another aspect, in the inner layer, a retention ratio of tensile breaking strength to initial tensile breaking strength after exposure to an atmospheric temperature of 200 °C for 1000 hours is 75% or higher.

(20) In the fuel filler pipe according to another aspect, in the inner layer, a retention ratio of tensile breaking elongation to initial tensile breaking elongation after exposure to an atmospheric temperature of 200 °C for 1000 hours is 75% or higher.

(21) In the fuel filler pipe according to another aspect, in the inner layer, a retention ratio of tensile breaking strength to initial tensile breaking strength after exposure to an atmospheric temperature of 220 °C for 1000 hours is 70% or higher.

(22) In the fuel filler pipe according to another aspect, in the inner layer, a retention ratio of tensile breaking elongation to initial tensile breaking elongation after exposure to an atmospheric temperature of 220 °C for 1000 hours is 65% or higher.

ADVANTAGEOUS EFFECTS OF INVENTION

According to the present invention, it is possible to provide a fuel filler pipe having an excellent fuel shielding property, excellent resistance to heat aging, excellent interlayer adhesion, and excellent conductivity.

DESCRIPTION OF EMBODIMENTS

In the present invention, the following definitions of terms will be used.

A "melting point" is a temperature corresponding to a maximum value of a melting peak measured by a differential scanning calorimetry (DSC) method.

"Unit based on a monomer" is a general term for an atomic group directly formed by polymerizing one monomer molecule and an atomic group obtained by chemically converting a part of the atomic group. In the present specification, a unit based on a monomer is also simply referred to as a monomer unit. For example, a unit based on TFE is also referred to as a TFE unit.

"Monomer" means a compound having a polymerizable carbon-carbon double bond.

"Conductive filler" means a filler having conductivity among fillers for a resin.

"Aspect ratio" means a value obtained by dividing a length of the conductive filler by a thickness of the conductive filler.

The term "to" indicating a numerical range means that numerical values described before and after the "to" are included as a lower limit value and an upper limit value.

"TFE" means tetrafluoroethylene.

"TFE unit" means a unit based on tetrafluoroethylene.

"E unit" means a unit based on ethylene.

"P unit" means a unit based on propylene.

"VOH" means a vinyl alcohol.

"VOH unit" means a unit based on a vinyl alcohol.

"Alkali metal" means a metal positioned in Group 1 of the periodic table (IUPAC Periodic Table of the Elements). Specifically, alkali metals include lithium (Li), sodium (Na), potassium (K), rubidium (Rb), cesium (Cs), and francium (Fr).

"Alkaline earth metal" means a metal positioned in Group 2 of the periodic table (IUPAC Periodic Table of the Elements). Specifically, alkaline earth metals include beryllium (Be), magnesium (Mg), calcium (Ca), strontium (Sr), barium (Ba), and radium (Ra).

[Fuel filler pipe]

A fuel filler pipe of the present invention includes only an inner layer containing a fluorine-containing copolymer, an intermediate layer containing a non-fluorine copolymer, and an outer layer containing a polyolefin.

<Inner layer>

The inner layer is a layer containing a fluorine-containing copolymer.

The fluorine-containing copolymer contained in the inner layer is a fluorine-containing copolymer having a TFE unit and an E unit.

The fluorine-containing copolymer has a carbonyl group-containing group.

The fluorine-containing copolymer has a melting point of 250 °C or lower.

Hereinafter, the fluorine-containing copolymer, that is, "a fluorine-containing copolymer having a TFE unit and an E unit, having a carbonyl group-containing group, and having a melting point of 250 °C or lower" is also referred to as an "ETFE-based copolymer".

The inner layer may be a layer that contains an inner layer-forming composition containing the ETFE-based copolymer.

Examples of the carbonyl group-containing group include a group having a carbonyl group between carbon atoms of a hydrocarbon group, a carbonate group, a carboxy group, a haloformyl group, an alkoxycarbonyl group, and an acid anhydride group.

Examples of the hydrocarbon group in the group having a carbonyl group between the carbon atoms of the hydrocarbon group include an alkylene group having 2 to 8 carbon atoms. The carbon number of the alkylene group having 2 to 8 carbon atoms is the number of carbon atoms not including the carbon atom constituting the carbonyl group. The alkylene group may be linear or may be branched.

The haloformyl group is represented by -C(=O)-X, where X represents a halogen atom. Examples of the halogen atom include a fluorine atom and a chlorine atom, and a fluorine atom is preferable.

An alkoxy group in the alkoxycarbonyl group may be linear or may be branched. As the alkoxy group, an alkoxy group having 1 to 8 carbon atoms is preferable, and a methoxy group or an ethoxy group is more preferable.

As the acid anhydride group, an unsaturated carboxylic acid anhydride group is preferable, a dicarboxylic acid anhydride group is more preferable, and a dicarboxylic acid anhydride group bonded to a cyclic hydrocarbon is further preferable.

As the ETFE-based copolymer, a copolymer containing a TFE unit (a), an E unit (b) and an AHM unit (c) (hereinafter, also referred to as "ETFE-AHM-based copolymer") is preferable. Here, "AHM" means at least one functional monomer selected from the group consisting of itaconic anhydride, itaconic acid, citraconic anhydride, and citraconic acid, and "AHM unit" means a unit based on the AHM.

In the ETFE-AHM-based copolymer, a molar ratio (Ma/Mb) of the TFE unit (a) and the E unit (b) is preferably 20/80 to 80/20, and more preferably 50/50 to 70/30. Here, Ma and Mb are the numbers of moles of the TFE unit (a) and the E unit (b) in the ETFE-AHM-based copolymer, respectively. When Ma/Mb is equal to or more than a lower limit value of the range, heat resistance, weather resistance, chemical resistance, a gas barrier property, and a liquid barrier property of the ETFE-AHM-based copolymer become higher, and when Ma/Mb is equal to or less than an upper limit value of the range, mechanical strength and melt moldability of the ETFE-AHM-based copolymer become higher. When Ma/Mb is within the range, the heat resistance, weather resistance, chemical resistance, gas barrier property, liquid barrier property, mechanical strength, and melt moldability of the ETFE-AHM-based copolymer become more excellent.

In the ETFE-AHM-based copolymer, a molar ratio (Mc/(Ma + Mb)) of the AHM unit (c) to the total of the TFE unit (a) and the E unit (b) is preferably 1/10000 to 5/100, more preferably 1/1000 to 5/100, further preferably 3/2000 to 3/100, and still further preferably 3/1000 to 3/100. Here, Ma, Mb, and Mc are the numbers of moles of the TFE unit (a), the E unit (b), and the AHM unit (c) in the ETFE-AHM-based copolymer, respectively. When Mc/(Ma + Mb) is equal to or more than a lower limit value of the range, interlayer adhesion between the inner layer containing the ETFE-AHM-based copolymer and the intermediate layer containing the non-fluorine copolymer becomes higher, and when Mc/(Ma + Mb) is equal to or less than an upper limit value of the range, a liquid barrier property of the inner layer containing the ETFE-AHM-based copolymer becomes higher. When Mc/(Ma + Mb) is within the range, the inner layer containing the ETFE-AHM-based copolymer is more excellent in the interlayer adhesion and the liquid barrier property with the intermediate layer containing the non-fluorine copolymer.

The ETFE-based copolymer is more preferably a copolymer further containing a repeating unit (d) based on another fluorine-containing monomer (here, excluding TFE), in addition to the ETF unit (a), the E unit (b), and the AHM unit (c) (hereinafter, also referred to as an "ETFE-AHM-OTHER-based copolymer").

Examples of the other fluorine-containing monomer (here, excluding TFE) include: a fluoroolefin having a hydrogen atom as an unsaturated group such as chlorotrifluoroethylene (hereinafter, also referred to as "CTFE"), $CH_2=CX(CF_2)_nY$ (where X and Y are each independently a hydrogen atom or a fluorine atom, and n is an integer of 2 to 8), vinylidene fluoride (hereinafter, also referred to as "VDF"), or vinyl fluoride; a fluoroolefin having no hydrogen atom in an unsaturated group such as hexafluoropropylene (hereinafter, also referred to as "HFP") (here, excluding TFE); a perfluoro(alkyl vinyl ether) such as perfluoro(methyl vinyl ether), perfluoro(propyl vinyl ether) (hereinafter, also referred to as "PPVE"), or perfluoro(butyl vinyl ether); and a fluorine-containing alkyl vinyl ether having a hydrogen atom such as 2,2,2-trifluoroethyl trifluorovinyl ether. These other fluorine-containing monomers may be used alone or two or more kinds thereof may be used in combination.

The other fluorine-containing monomer (here, excluding TFE) is preferably at least one selected from the group consisting of $CH_2=CX(CF_2)_nY$ (where X and Y are each independently a hydrogen atom or a fluorine atom, and n is an integer of 2 to 8), VDF, HFP, and PPVE, and is more preferably the $CH_2=CX(CF_2)_nY$ (where X and Y are each independently a hydrogen atom or a fluorine atom, and n is an integer of 2 to 8).

In the $CH_2=CX(CF_2)_nY$ (where X and Y are each independently a hydrogen atom or a fluorine atom, and n is an integer of 2 to 8), n is preferably an integer of 2 to 4. The ETFE-AHM-OTHER-based copolymer contains a unit based on the $CH_2=CX(CF_2)_nY$ (where X and Y are each independently a hydrogen atom or a fluorine atom, and n is an integer of 2 to 4) as the unit (d) based on the other fluorine-containing monomer (excluding TFE), the inner layer containing the ETFE-AHM-OTHER-based copolymer is more excellent in the liquid barrier property and crack resistance.

Specific examples of the $CH_2=CX(CF_2)_nY$ (where X and Y are each independently a hydrogen atom or a fluorine atom, and n is an integer of 2 to 8) include $CH_2=CF(CF_2)_2F$, $CH_2=CF(CF_2)_3F$, $CH_2=CF(CF_2)_4F$, $CH_2=CF(CF_2)_2H$, $CH_2=CF(CF_2)_3H$, $CH_2=CF(CF_2)_4H$, $CH_2=CH(CF_2)_2F$, $CH_2=CH(CF_2)_3F$, $CH_2=CH(CF_2)_4F$, $CH_2=CH(CF_2)_2H$, $CH_2=CH(CF_2)_3H$, and $CH_2=CH(CF_2)_4H$.

The $CH_2=CX(CF_2)_nY$ (where X and Y are each independently a hydrogen atom or a fluorine atom, and n is an integer of 2 to 8) is preferably at least one selected from the group consisting of $CH_2=CF(CF_2)_2F$, $CH_2=CH(CF_2)_2F$, $CH_2=CH(CF_2)_2H$, and $CH_2=CF(CF_2)_2H$, and is more preferably any one selected from the group consisting of $CH_2=CF(CF_2)_2F$, $CH_2=CH(CF_2)_2F$, $CH_2=CH(CF_2)_2H$, and $CH_2=CF(CF_2)_2H$, and further preferably $CH_2=CH(CF_2)_2F$.

In the ETFE-AHM-OTHER-based copolymer, a content of the repeating unit (d) based on the other fluorine-containing monomer (here, excluding TFE) is preferably 0.1 to 20 mol%, more preferably 0.5 to 15 mol%, and further preferably 0.5 to 10 mol%, with respect to all repeating units in the ETFE-AHM-OTHER-based copolymer. When the content of the repeating unit (d) based on the other fluorine-containing monomer (here, excluding TFE) is within the range, the inner layer containing the ETFE-AHM-OTHER-based copolymer is more excellent in crack resistance.

A melt flow rate of the ETFE-based copolymer (hereinafter, also referred to as "MFR") is preferably 0.1 to 1000 g/10 min, and more preferably 1.0 to 100 g/10 min. When the MFR of the ETFE-based copolymer is within the range, moldability of the ETFE-based copolymer is more excellent. The MFR of the ETFE-based copolymer is a value measured under the conditions of a temperature of 297 °C and a load of 49 N in accordance with ASTM D3159.

A method for producing the ETFE-based copolymer is not particularly limited, and is preferably a polymerization method using a radical polymerization initiator. Examples of the polymerization method include bulk polymerization; solution polymerization using an organic solvent such as a fluorinated hydrocarbon, a chlorinated hydrocarbon, a fluorochloride hydrocarbon, an alcohol, or a hydrocarbon; suspension polymerization using an aqueous medium and optionally an appropriate organic solvent; and emulsion polymerization using an aqueous medium and an emulsifier, and the solution polymerization is preferable.

The temperature at which the half-life of the radical polymerization initiator is 10 hours is preferably 0 °C to 100 °C, and more preferably 20 °C to 90 °C.

Examples of the radical polymerization initiator include an azo compound such as azobisisobutyronitrile; a non-fluorinated diacyl peroxide such as isobutyryl peroxide, octanoyl peroxide, benzoyl peroxide, or lauroyl peroxide; a peroxy dicarbonate such as diisopropyl peroxydicarbonate; a peroxy ester such as tert-butyl peroxypivalate, tert-butyl peroxyisobutyrate, or tert-butyl peroxyacetate; a fluorine-containing diacyl peroxide such as $(Z(CF_2)_pCOO)_2$ (where Z is a hydrogen atom, a fluorine atom, or a chlorine atom, and p is an integer of 1 to 10); and an inorganic peroxide such as potassium persulfate, sodium persulfate, or ammonium persulfate.

In the method for producing the ETFE-based copolymer, a chain transfer agent may be used to control the MFR of the ETFE-based copolymer.

Examples of the chain transfer agent include an alcohol such as methanol or ethanol; a chlorofluorohydrocarbon such as such as 1,3-dichloro-1,1,2,2,3-pentafluoropropane or 1,1-dichloro-1-fluoroethane; and a hydrocarbon such as pentane, hexane, or cyclohexane. When the chain transfer agent is a chain transfer agent having a functional group such as an ester bond, a carbonate bond, a hydroxyl group, a carboxy group or a carbonyl fluoride group, a terminal group having an interaction with the non-fluorine copolymer contained in the intermediate layer is introduced into the ETFE-based copolymer, which is preferable. Examples of the chain transfer agent having a functional group include acetic acid, acetic anhydride, methyl acetate, ethylene glycol, and propylene glycol.

In the method for producing the ETFE-based copolymer, polymerization conditions are not particularly limited. A polymerization temperature in the method for producing the ETFE-based copolymer is preferably 0 °C to 100 °C, and more preferably 20 °C to 90 °C. A polymerization pressure in the method for producing the ETFE-based copolymer is preferably 0.1 to 10 MPa, and more preferably 0.5 to 3 MPa. A polymerization time in the method for producing the ETFE-based copolymer is preferably 1 to 30 hours.

When the ETFE-AHM-based copolymer is produced by the solution polymerization, a concentration of the AHM is preferably 0.01 to 5 mol%, more preferably 0.1 to 3 mol%, and further preferably 0.1 to 1 mol%, with respect to all monomers. When the concentration of the AHM is equal to or less than the upper limit value of the range, a polymerization rate tends to be further improved. When the concentration of the AHM is within the range, the polymerization rate at the time of production is further improved, and the inner layer containing the ETFE-AHM-based copolymer to be produced is more excellent in interlayer adhesion with the intermediate layer. During the polymerization, it is preferable that, as the AHM is consumed in the polymerization, the AHM be continuously or intermittently supplied in a consumed amount into a polymerization tank to maintain a concentration of the AHM within the range.

The content of the unit based on the monomer having a carbonyl group-containing group (hereinafter, also referred to as "carbonyl group-containing unit") in the ETFE-based copolymer is preferably 0.05 to 20 mol%, more preferably 0.05 to 10 mol%, and further preferably 0.1 to 5 mol%, with respect to a total number of moles of the unit constituting the ETFE-based copolymer.

When the content of the carbonyl group-containing unit is within the above range, the interlayer adhesion between the inner layer and the intermediate layer is further improved, the heat resistance of the ETFE-based copolymer is further improved, and poor adhesion, coloring, and foaming during processing at a high temperature and peeling, coloring, foaming, and elution due to decomposition when used at a high temperature are unlikely to occur.

A melting point of the ETFE-based copolymer is 250 °C or lower, preferably 150 °C to 250 °C, and more preferably 180 °C to 220 °C. When the melting point of the ETFE-based copolymer exceeds 250 °C, a temperature at the time of molding cannot be lowered. When the melting point of the ETFE-based copolymer is equal to or higher than a lower limit value of the range, the ETFE-based copolymer is more excellent in heat resistance.

The inner layer may contain a component other than the ETFE-based copolymer.

Examples of the other component include a polymer other than the ETFE-based copolymer. Examples of the polymer other than the ETFE-based copolymer include a melt-moldable fluorine-containing polymer other than the ETFE-based copolymer and a thermoplastic resin other than the fluorine-containing polymer.

Examples of the melt-moldable fluorine-containing polymer other than the ETFE-based copolymer include a perfluoroalkoxy alkane (hereinafter, also referred to as "PFA"), an ethylene-tetrafluoroethylene copolymer (excluding the ETFE-based polymer) (hereinafter, also referred to as "cETFE"), polyvinylidene fluoride (hereinafter, also referred to as "PVDF"), and an ethylene-chlorotrifluoroethylene copolymer (hereinafter, also referred to as "ECTFE").

Examples of the thermoplastic resin other than the fluorine-containing polymer include thermoplastic polyimides, polyarylates, and polysulfones.

In addition, as the other components, an additive such as a heat stabilizer, a filler, a pigment, or an ultraviolet absorber may be contained.

A content of the ETFE-based copolymer in the inner layer is preferably 80% to 100% by mass and more preferably 90% to 100% by mass, with respect to a total mass of the inner layer.

The inner layer preferably further contains a conductive filler.

The term "conductive" means that, for example, in a case where a flammable fluid such as gasoline comes into continuous contact with an insulator such as a resin, static electricity may accumulate and sparks may occur, causing a fuel to ignite, but electrical characteristics are within a degree to which static electricity is not accumulated. Accordingly, it possible to prevent generation of sparks due to static electricity generated when transporting a fluid such as a fuel.

The conductive filler includes all fillers added to impart conductive performance to the resin, and examples thereof include a granular filler, a flake-like filler, and a fibrous filler.

Examples of the granular filler include carbon black and graphite.

Examples of the flake-like filler include aluminum flakes, nickel flakes, and nickel-coated mica.

Examples of the fibrous filler include carbon nanotubes, carbon nanofibers, carbon fibers, carbon-coated ceramic fibers, carbon whiskers, and metal fibers such as aluminum fibers, copper fibers, brass fibers, and stainless fibers.

The conductive filler is preferably carbon black.

The carbon black is not particularly limited, and includes any carbon black generally used for imparting conductivity.

Examples of the carbon black include acetylene black obtained by completely burning acetylene gas, Ketjen black produced by furnace-type incomplete combustion using crude oil as a raw material, oil black, naphthaline black, thermal black, lamp black, channel black, roll black, and disc black.

In addition, as the carbon black, various carbon powders having different characteristics such as an average particle size, a specific surface area, a DBP oil absorption amount, and an ash content are produced. The characteristics of the carbon black are not particularly limited, but carbon black having a good chain structure and a high aggregation density is preferable.

The average particle size of the carbon black is preferably 500 nm or less, more preferably 5 to 100 nm, and further preferably 10 to 70 nm. When the average particle size of the carbon black is 500 nm or less, the inner layer can obtain excellent conductivity with a smaller amount of carbon black added, and the impact resistance becomes better.

The specific surface area (BET method) of the carbon black is preferably 10 $m^2$/g or more, more preferably 300 $m^2$/g or more, and further preferably 500 to 1500 $m^2$/g.

The dibutyl phthalate (DBP) oil absorption amount of the carbon black is preferably 50 mL/100 g or more, more preferably 100 mL/100 g or more, and further preferably 300 mL/100 g or more. The DBP oil absorption amount is a value measured by a method specified in ASTM D-2414.

The ash content of the carbon black is preferably 0.5% by mass or less, and more preferably 0.3% by mass or less.

A volatile content of the carbon black is preferably less than 1.0% by mass.

The conductive filler may be surface-treated with a surface treatment agent such as a titanate-based, aluminum-based, or silane-based agent.

As the conductive filler, it is also possible to use a granulated filler in order to improve melt-kneading workability.

A blending amount of the conductive filler in the inner layer cannot be unconditionally specified because the blending amount differs depending on a kind of the conductive filler, but is preferably 3 to 30 parts by mass with respect to 100 parts by mass of the ETFE-based copolymer contained in the inner layer, from the viewpoint of balance between the conductivity of the inner layer, mechanical strength of the inner layer, and fluidity of the inner layer-forming composition for forming the inner layer. Also, the blending amount of the conductive filler is preferably an amount in which a surface specific resistance value of a molded product obtained by melt-extruding the inner layer-forming composition to which the conductive filler is blended is $10^8$ Ω or less, and more preferably an amount in which the surface specific resistance value is $10^6$ Ω or less, for the sake of imparting sufficient antistatic performance to the fuel filler pipe of the present invention. However, the blending of the conductive filler tends to cause a decrease in strength of the inner layer and deterioration in fluidity of the inner layer-forming composition. Therefore, as long as targeted conductivity can be obtained, it is preferable that the blending amount of the conductive filler be as small as possible.

The surface resistivity of the inner layer is preferably $10^5$ Ω/sq. or less and more preferably $10^4$ Ω/sq. or less.

The surface resistivity of the inner layer was measured according to SAE J-2260.

<Intermediate layer>

The intermediate layer is a layer containing a non-fluorine copolymer.

The non-fluorine copolymer contained in the intermediate layer is a non-fluorine copolymer having the E unit and the VOH unit. Hereinafter, the non-fluorine copolymer used in the present invention is also referred to as an "EVOH copolymer".

The intermediate layer is formed by molding an intermediate layer-forming composition containing the EVOH copolymer by melt extrusion.

The EVOH copolymer is preferably obtained by saponifying an ethylene-fatty acid vinyl copolymer. In this case, the saponification degree is preferably 99% or more, and more preferably 99.5% or more. When the saponification degree is 99% or more, the gas barrier property of the intermediate layer is further improved, and the melt stability is also further improved.

A lower limit of the ethylene content of the EVOH copolymer is preferably 25 mol% or more, more preferably 30 mol% or more, and further preferably 33 mol% or more. Also, an upper limit of the ethylene content of the EVOH copolymer is preferably 50 mol% or less, more preferably 45 mol% or less, further preferably 40 mol% or less, and still further preferably 37 mol% or less. Furthermore, a range of the ethylene content of the EVOH copolymer is preferably 25 to 50 mol%, more preferably 25 to 45 mol%, further preferably 30 to 40 mol%, and still further preferably 33 to 37 mol%.

When the ethylene content of the EVOH copolymer is 25 mol% or more, the thermal stability of the intermediate layer-forming composition at the time of melt extrusion is less likely to decrease, and gelation is also less likely to occur. In addition, when the intermediate layer is formed by the intermediate layer-forming composition, streaks and fish eyes are less likely to occur. The effect is particularly remarkable when the fuel filler pipe of the present invention is used at a higher temperature or higher speed than general conditions for a long time.

When the ethylene content of the EVOH copolymer is 45 mol% or less, the gas barrier property of the intermediate layer formed of the intermediate layer-forming composition is less likely to be lowered, and original characteristics of the EVOH copolymer are more easily retained.

The intermediate layer-forming composition may contain, in addition to the EVOH copolymer, an auxiliary material such as a heat-resistant stabilizer, an antigelling agent, or an antioxidant, and vinyl acetate due to the saponification degree not being 100%. The content of the EVOH copolymer in the intermediate layer-forming composition is preferably 80% to 100% by mass, more preferably 90% to 100% by mass, and further preferably 95% to 100% by mass, with respect to the total mass of the intermediate layer-forming composition.

A lower limit of the MFR (measured at a temperature of 190 °C and under a load of 2160 g according to ASTM D1238) of the intermediate layer-forming composition is preferably 0.1 g/10 min or more, more preferably 0.5 g/10 min or more, further preferably 1 g/10 min or more, and still further preferably 1.5 g/10 min or more. In addition, an upper limit of the MFR is preferably 50 g/10 min or less, more preferably 15 g/10 min or less, further preferably 12 g/10 min or less, and still further preferably 10 g/10 min or less. Furthermore, a range of the melt index is preferably 0.1 to 50 g/10 min, more preferably 0.5 to 15 g/10 min, further preferably 1 to 12 g/10 min, and still further preferably 1.5 to 10 g/10 min.

When the melt index is 0.1 g/10 min or more, in a case where the fuel filler pipe of the present invention is used at a high temperature for a long time, fish eyes and streaks are less likely to occur when forming the intermediate layer by the intermediate layer-forming composition and an output of the intermediate layer-forming composition, that is, the amount of resin that can be discharged when the same energy is applied for extrusion, is further improved.

When the melt index is 50 g/10 min or less, the mechanical strength of the intermediate layer formed of the intermediate layer-forming composition becomes higher to further improve the practicality, a melt viscosity during melt molding at a high temperature does not become too low, and multi-layer molding becomes easier.

The intermediate layer-forming composition preferably contains a boron compound from a viewpoint of improving thermal stability, and particularly a long-running property at a high temperature.

Examples of the boron compound include boric acid and a boric acid derivative such as a borate ester or borate. Examples of the boric acid include orthoboric acid, metaboric acid, and tetraboric acid. Examples of the borate ester include triethyl borate and trimethyl borate. Examples of the borate include sodium metaborate, sodium tetraborate, sodium pentaborate, borax, lithium borate, and potassium borate. The boron compound is preferably orthoboric acid ($H_3BO_3$; hereinafter, also simply referred to as "boric acid"), borax, and a derivatives thereof from the viewpoints of a large effect of improving thermal stability of the intermediate layer and a low cost.

A lower limit of the boron compound content in the intermediate layer-forming composition is preferably 100 ppm or more, more preferably 500 ppm or more, and further preferably 1000 ppm or more, in terms of boric acid ($H_3BO_3$) with respect to the total mass of the intermediate layer-forming composition. In addition, an upper limit of the boron compound content in the intermediate layer-forming composition is preferably 5000 ppm or less, more preferably 3000 ppm or less, and further preferably 2000 ppm or less, in terms of boric acid ($H_3BO_3$) with respect to the total mass of the intermediate layer-forming composition. Furthermore, a range of the boron compound content in the intermediate layer-forming composition is preferably 100 to 5000 ppm, more preferably 500 to 3000 ppm, and further preferably 1000 to 2000 ppm, in terms of boric acid ($H_3BO_3$) with respect to the total mass of the intermediate layer-forming composition.

When the boron compound content in the intermediate layer-forming composition is 100 ppm or more in terms of boric acid ($H_3BO_3$) with respect to the total mass of the intermediate layer-forming composition, a torque fluctuation during heating and melting of the intermediate layer-forming composition is further suppressed, and a melt extrusion property is further improved.

When the boron compound content in the intermediate layer-forming composition is 5000 ppm or less in terms of boric acid ($H_3BO_3$) with respect to the total mass of the intermediate layer-forming composition, gelation due to localization of the boron compound does not easily proceed, fish eyes and gel do not occur during melt molding, and moldability becomes better.

In addition, the intermediate layer-forming composition preferably contains at least one selected from the group consisting of a carboxylic acid and a salt thereof from the viewpoint of preventing the intermediate layer from coloring.

Examples of the carboxylic acid include acetic acid and propionic acid, and acetic acid is preferable. The carboxylic acid is preferably a carboxylic acid having only one carboxy group in the molecule (a monovalent carboxylic acid) such as acetic acid, rather than a carboxylic acid having two or more carboxy groups in the molecule (a polyvalent carboxylic acid) such as adipic acid or phthalic acid. The polyvalent carboxylic acid may crosslink the EVOH copolymer between molecules and cause thermal stability to deteriorate.

A lower limit of the content of at least one selected from the group consisting of the carboxylic acid and a salt thereof in the intermediate layer-forming composition is preferably 100 ppm or more, more preferably 150 ppm or more, and further preferably 200 ppm or more, in terms of carboxylic acid with respect to the total mass of the intermediate layer-forming composition. In addition an upper limit of the content of at least one selected from the group consisting of the carboxylic acid and a salt thereof in the intermediate layer-forming composition is preferably 1000 ppm or less, more preferably 500 ppm or less, and further preferably 400 ppm or less, with respect to the total mass of the intermediate layer-forming composition. Furthermore, a range of the content of at least one selected from the group consisting of the carboxylic acid and a salt thereof in the intermediate layer-forming composition is preferably 100 to 1000 ppm, more preferably 150 to 500 ppm, and further preferably 200 to 400 ppm, with respect to the total mass of the intermediate layer-forming composition.

When the content of at least one selected from the group consisting of the carboxylic acid and a salt thereof in the intermediate layer-forming composition is 100 ppm or more with respect to the total mass of the intermediate layer-forming composition, an effect of preventing coloration during melt molding of the intermediate layer is further exhibited, and the intermediate layer does not turn yellow as easily.

When the content of at least one selected from the group consisting of the carboxylic acid and a salt thereof in the intermediate layer-forming composition is 1000 ppm or less with respect to the total mass of the intermediate layer-forming composition, gelation does not easily occur during melt molding of the intermediate layer-forming composition, particularly during the melt molding over a long period of time, the occurrence of fish eyes and gelation can be suppressed, and there is no concern of poor appearance.

The intermediate layer-forming composition preferably contains an alkali metal salt from the viewpoint of improving interlayer adhesion between the inner layer and the outer layer to be described later.

Examples of the alkali metal forming the alkali metal salt include lithium, sodium and potassium, and potassium or sodium is preferable.

In a case where the borate is an alkali metal salt, examples of the alkali metal salt include a sodium salt and a potassium salt.

Examples of the alkali metal salt include a carboxylate, a phosphate, and a borate, and a carboxylate is preferable, a lactate or acetate is more preferable, and an acetate is further preferable.

A lower limit of a content of the alkali metal salt in the intermediate layer-forming composition is preferably 50 ppm or more, more preferably 70 ppm or more, and further preferably 90 ppm or more, in terms of the metal with respect to the total mass of the intermediate layer-forming composition. In addition, an upper limit of the content of the alkali metal salt in the intermediate layer-forming composition is preferably 300 ppm or less, more preferably 250 ppm or less, and further preferably 200 ppm or less, in terms of the metal with respect to the total mass of the intermediate layer-forming composition. Furthermore, a range of the content of the alkali metal salt in the intermediate layer-forming composition is preferably 50 to 500 ppm, more preferably 50 to 300 ppm, further preferably 70 to 250 ppm, and still further preferably 90 to 200 ppm, in terms of metal with respect to the total mass of the intermediate layer-forming composition.

When the content of the alkali metal salt in the intermediate layer-forming composition is 50 ppm or more in terms of the metal, with respect to the total mass of the intermediate layer-forming composition, adhesion failure does not occur during coextrusion molding of the intermediate layer-forming composition. In addition, when the content of the alkali metal salt in the intermediate layer-forming composition is 500 ppm or less in terms of the metal, with respect to the total mass of the intermediate layer-forming composition, coloring due to decomposition of the alkali metal salt when molding the intermediate layer at a high temperature is less likely to occur.

The intermediate layer-forming composition preferably contains an alkaline earth metal salt from the viewpoint of stably performing melt molding over a long period of time.

Examples of the alkaline earth metal forming the alkaline earth metal salt include beryllium, magnesium, calcium, strontium, and barium, and magnesium, calcium, or barium is preferable.

Examples of the alkaline earth metal salt include a carboxylate, a phosphate, and a borate, and an acetate is preferable.

A lower limit of a content of the alkaline earth metal salt in the intermediate layer-forming composition is preferably 10 ppm or more, more preferably 15 ppm or more, and further preferably 20 ppm or more, in terms of the metal with respect to the total mass of the intermediate layer-forming composition. In addition, an upper limit of the content of the alkaline earth metal salt in the intermediate layer-forming composition is preferably 50 ppm or less, more preferably 45 ppm or less, and further preferably 40 ppm or less, in terms of the metal with respect to the total mass of the intermediate layer-forming composition. Furthermore, a range of the content of the alkaline earth metal salt in the intermediate layer-forming composition is preferably 10 to 50 ppm, more preferably 15 to 45 ppm, and further preferably 20 to 40 ppm, in terms of the metal with respect to the total mass of the intermediate layer-forming composition.

When the content of the alkaline earth metal salt in the intermediate layer-forming composition is 10 ppm or more in terms of the metal with respect to the total mass of the intermediate layer-forming composition, fish eyes do not easily occur during long-term melt extrusion at a high temperature. In addition, when the content of the alkaline earth metal salt in the intermediate layer-forming composition is 50 ppm or less in terms of the metal, with respect to the total mass of the intermediate layer-forming composition, foaming in an extruder die is unlikely, and voids and holes do not easily occur during melt molding at a high temperature (around 280 °C). Furthermore, when the content of the alkaline earth metal salt in the intermediate layer-forming composition is within a range of 10 to 50 ppm in terms of the metal, with respect to the total mass of the intermediate layer-forming composition, even in a molten state of the intermediate layer-forming composition at a high temperature for a long period of time, a viscosity does not change significantly, an operation for a long time is possible, and a molded product having a good appearance can be obtained.

The intermediate layer-forming composition preferably contains a phosphoric acid derivative from a viewpoint of further reducing coloring during melt molding and preventing the composition from gelling.

Examples of the phosphoric acid derivative include phosphoric acid ($H_3PO_4$) and phosphates. The phosphate may be contained in any form of a monophosphate, a diphosphate, and a triphosphate, and a kind of cations thereof is not particularly limited. The phosphate is preferably at least one selected from the group consisting of a phosphate of an alkali metal and a phosphate of an alkaline earth metal. Examples of the phosphate include sodium dihydrogen phosphate, potassium dihydrogen phosphate, disodium hydrogen phosphate, and dipotassium hydrogen phosphate, and potassium dihydrogen phosphate is preferable.

A lower limit of a content of the phosphoric acid derivative in the intermediate layer-forming composition is preferably 10 ppm or more, and more preferably 20 ppm or more, in terms of phosphoric acid ($H_3PO_4$) with respect to the total mass of the intermediate layer-forming composition. In addition, an upper limit of the content of the phosphoric acid derivative in the intermediate layer-forming composition is preferably 100 ppm or less, more preferably 80 ppm or less, and further preferably 60 ppm or less, in terms of phosphoric acid ($H_3PO_4$) with respect to the total mass of the intermediate layer-forming composition. Furthermore, a range of the content of the phosphoric acid derivative in the intermediate layer-forming composition is preferably 10 to 100 ppm, more preferably 10 to 80 ppm, and further preferably 20 to 60 ppm, in terms of phosphoric acid ($H_3PO_4$) with respect to the total mass of the intermediate layer-forming composition.

When the content of the phosphoric acid derivative in the intermediate layer-forming composition is 10 ppm or more in terms of phosphoric acid ($H_3PO_4$) with respect to the total mass of the intermediate layer-forming composition, an effect of preventing coloration during melt molding of the intermediate layer is further exhibited, and there is no concern of poor appearance due to the coloring of the intermediate layer. When the content of the phosphoric acid derivative in the intermediate layer-forming composition is 100 ppm or less in terms of phosphoric acid ($H_3PO_4$) with respect to the total mass of the intermediate layer-forming composition, gelation is suppressed during melt molding of the intermediate layer, especially during melt molding at a high temperature, and there is no concern of poor appearance due to fish eyes and frequent gelation.

In the intermediate layer-forming composition, an aspect of containing, with respect to the total mass of the intermediate layer-forming composition, 100 to 5000 ppm of the boron compound in terms of boric acid ($H_3BO_3$), 100 to 1000 ppm of at least one selected from the group consisting of carboxylic acid and/or a salt thereof in terms of carboxylic acid, and 50 to 300 ppm of the alkali metal salt in terms of metal is useful and preferable.

In addition, in the intermediate layer-forming composition, an aspect of containing 10 to 50 ppm of the alkaline earth metal salt in terms of the metal with respect to the total mass of the intermediate layer-forming composition is also useful and similarly preferable.

Furthermore, in the intermediate layer-forming composition, an aspect of containing, in addition to the alkaline earth metal salt, 100 to 5000 ppm of the boron compound in terms of boric acid ($H_3BO_3$) with respect to the total mass of the intermediate layer-forming composition is useful, and more preferable.

In preparing the intermediate layer-forming composition, a method of mixing the EVOH copolymer with the various compounds described above is not particularly limited. Examples thereof include a method of immersing the EVOH copolymer in a solution containing the various compounds, a method of melting the EVOH copolymer and mixing it with the various compounds, and a method of dissolving the EVOH copolymer in an appropriate solvent and mixing it with the various compounds. In a case of immersing the EVOH copolymer in the solution containing the various compounds, a concentration of the various compounds in the solution is not particularly limited. In addition, the solvent of the solution containing the various compounds is not particularly limited, and water is preferable for reasons such as handling. In a case where the EVOH copolymer is obtained by saponifying an ethylene-vinyl acetate copolymer, the mass of a solution when the saponified product of the ethylene-vinyl acetate copolymer (hereinafter, also simply referred to as a "saponified product") is immersed in a solution containing the various compound is preferably 3 times or more, and more preferably 20 times or more the dry mass of the saponified product. An immersion time when the EVOH copolymer is immersed in a solution containing the various compounds varies depending on a form of the EVOH copolymer, and in a case where the EVOH copolymer is a substantially cubic-shaped chip having each side of about 1 to 10 mm, the immersion time is preferably 1 hour or more and more preferably 2 hours or more.

A lower limit of a decomposition start temperature (JIS K 7120: 1987) of the intermediate layer-forming composition is preferably 350 °C or higher, more preferably 355 °C or higher, and even more preferably 360 °C or higher. In addition, an upper limit of the decomposition start temperature of the intermediate layer-forming composition is preferably 400 °C or lower. Furthermore, a range of the decomposition start temperature of the intermediate layer-forming composition is preferably 350 °C to 400 °C, more preferably 355 °C to 400 °C, and further preferably 360 °C to 400 °C.

When the decomposition start temperature of the intermediate layer-forming composition is within the range, molding defects due to deterioration of a resin do not easily occur even during long-term operation at a high temperature.

One kind of the EVOH copolymer may be used alone, or two or more kinds of the EVOH copolymer having different polymerization degrees, ethylene content rates, and saponification degrees may be blended and used.

In addition, a thermoplastic resin other than the EVOH copolymer may be blended into the intermediate layer-forming composition, within a range not impairing the effect of the present invention. Examples of the thermoplastic resin include polyolefins such as polyethylene, polypropylene, poly 1-butene, poly 4-methyl-1-pentene, an ethylene propylene copolymer, a copolymer of ethylene and an α-olefin having 4 or more carbon atoms, a copolymer of a polyolefin and maleic anhydride, an ethylene-vinyl ester copolymer, an ethylene-acrylic acid ester copolymer, or polyolefins such as modified polyolefins graft-modified with unsaturated carboxylic acids or derivatives thereof on these polyolefins; polyamides such as nylon 6, nylon 66, or a nylon 6/66 copolymer; polyesters such as polyethylene terephthalate or polybutylene terephthalate; polyurethane; polyacetal; and vinyl-based polymers such as polyvinyl chloride, polyvinylidene chloride, polystyrene, polyacrylonitrile, or modified polyvinyl alcohol.

In addition, an additive other than the above-mentioned various compounds may be further added to the intermediate layer-forming composition. Examples of the additive include a plasticizer, a stabilizer, a surfactant, a coloring agent, an ultraviolet absorber, an antistatic agent, a desiccant, a cross-linking agent, a metal salt, a filler, and a reinforcing agent. The reinforcing agent includes, for example, various fibers. A content of the additive in the intermediate layer-forming composition is not particularly limited within a range not interfering with an effect of the present invention.

In addition, a method for molding the intermediate layer-forming composition is not particularly limited, and a method of coextrusion-molding the inner layer, the intermediate layer, and the outer layer to be described later is preferable.

A content of the EVOH copolymer in the intermediate layer is preferably 80% to 100% by mass, more preferably 90% to 100% by mass, and further preferably 95% to 100% by mass, with respect to the total mass of the intermediate layer.

<Outer layer>

The outer layer is a layer that contains a polyolefin having a unit based on an acid anhydride or is a layer in which a layer that contains a polyolefin having a unit based on an acid anhydride and a layer that contains a polyolefin having no unit based on an acid anhydride are directly laminated.

Examples of the polyolefin having no unit based on an acid anhydride include poly-α-olefins (hereinafter, also referred to as "PAOs") obtained by polymerizing α-olefins. An α-olefin is an alkene having a carbon-carbon double bond at an α-position, that is, at a terminal. An α-olefin having 4 or more carbon atoms such as 1-butene, 1-pentene, or 1-hexene is used as a comonomer when performing copolymerization and forms a short branched structure in a molecule.

Many PAOs have a flexible alkyl group as a branched structure. Since the alkyl group can have various conformations, it is difficult to align the respective polymer chains in an orderly manner. Therefore, the PAO having the above alkyl group as a branched structure does not easily crystallize and solidify, and remains a viscous liquid even at a low temperature.

Polyethylene obtained by mixing and copolymerizing an α-olefin having 5 or more carbon atoms such as 1-hexene, 1-heptene, or 1-octene is very flexible compared with a homopolymer of ethylene that does not have a branched structure and a copolymer of linear ethylene having a relatively simple molecule and an $\alpha$-olefin having 5 or less carbon atoms. The unit based on the propylene contains a methyl group and the unit based on the 1-butene contains an ethyl group as branched structures. However, since the units are short as an alkyl group, the flexibility of a copolymer of ethylene with propylene or 1-butene is not much different from a polyethylene homopolymer. Similarly, the flexibility of a homopolymer of propylene or 1-butene is not much different from that of a homopolymer of ethylene.

Examples of the polyolefin having no unit based on the acid anhydride include a homopolymer of ethylene and a copolymer of ethylene with at least one selected from the group consisting of $\alpha$-olefins other than the ethylene and an unsaturated group-containing polar compound other than the compound having an acid anhydride group. These polymers are collectively referred to as "ethylene-based polyolefins". A content of the unit (E unit) based on the ethylene of the ethylene-based polyolefin is preferably 80 mol% or more, and more preferably 90 mol% or more, with respect to the total number of moles of the units forming the ethylene-based polyolefin. Examples of the ethylene-based polyolefin include high-density polyethylene (HDPE), medium-density polyethylene (MDPE), low-density polyethylene (LDPE), linear low-density polyethylene (LLDPE), an ethylene-vinyl acetate copolymer, ethylene-ethyl acrylic acid ester copolymers and ethylene-based ionomers.

A density of the ethylene-based polyolefin is preferably 0.86 to 0.98 g/cm$^3$, and more preferably 0.90 to 0.94 g/cm$^3$.

The density of the ethylene-based polyolefin was measured according to JIS K 7112: 1999.

An MFR (190 °C) of the ethylene-based polyolefin is preferably 0.05 to 100 g/10 min, and more preferably 0.5 to 50 g/10 min.

The MFR of the ethylene-based polyolefin was measured at a temperature of 190 °C under a load of 2.16 kgf in accordance with ASTM D1238.

A Vicat softening point of the ethylene-based polyolefin is preferably 70 °C to 120 °C, and more preferably 75 °C to 110 °C.

The Vicat softening point of the ethylene-based polyolefin was measured according to JIS K 7206: 2016.

In addition, examples of the polyolefin having no unit based on an acid anhydride include a homopolymer of propylene and a copolymer of propylene with at least one selected from the group consisting of $\alpha$-olefins other than the propylene and an unsaturated group-containing polar compound other than the compound having an acid anhydride group. These polymers are collectively referred to as "propylene-based polyolefins". A content of the unit (P unit) based on the propylene of the propylene-based polyolefin is preferably 70 mol% or more, and more preferably 80 mol% or more, with respect to the total number of moles of the units forming the propylene-based polyolefin. As the propylene-based polyolefin, polypropylene is preferable.

The density of the propylene-based polyolefin is preferably 0.83 g/cm$^3$ or more, and more preferably 0.89 to 0.92 g/cm$^3$.

A melting point of the propylene-based polyolefin is preferably 120 °C to 170 °C, and more preferably 130 °C to 165 °C.

The melting point of the propylene-based polyolefin was measured at a heating rate of 10 °C/min using a DSC in accordance with JIS K 7121: 1987.

An MFR (190 °C) of the propylene-based polyolefin is preferably 0.01 to 100 g/10 min, and more preferably 0.05 to 50 g/10 min.

A Vicat softening point of the propylene-based polyolefin is preferably 100 °C to 160 °C, and more preferably 110 °C to 160 °C.

The density, MFR, and the Vicat softening point of the propylene-based polyolefin are measured in the same manner as the density, MFR, and Vicat softening point of the ethylene-based polyolefin, respectively.

Examples of the polyolefin having the unit based on the acid anhydride include a polymer of an $\alpha$-olefin and a compound having an acid anhydride group, a polymer obtained using a chain transfer agent or a polymerization initiator that provides an acid anhydride group during the polymerization of $\alpha$-olefins, and a polyolefin having no unit based on the above-mentioned acid anhydride and grafted with an acid anhydride such as maleic anhydride. Examples of a method of grafting an acid anhydride to a polyolefin having no unit based on an acid anhydride include a method of grafting an acid anhydride such as maleic anhydride when the polyolefin having no unit based on an acid anhydride is subjected to a post-process such as pelletization and compounding. Specifically, examples thereof include a method in which a peroxide is allowed to act on a polyolefin having no unit based on an acid anhydride to extract a hydrogen atom, and an acid anhydride having an unsaturated bond is grafted on a radical generation point (unsaturated bond).

The layer containing the polyolefin having the unit based on the acid anhydride may contain other components in addition to the polyolefin having the unit based on the acid anhydride.

Examples of the other components include a thermoplastic resin other than the polyolefin having a unit based on the acid anhydride. Examples of the thermoplastic resin include thermoplastic polyimides, polyarylates, and polysulfones.

In addition, examples of the other components include an additive such as a heat stabilizer, a filler, a pigment, or an ultraviolet absorber.

The layer containing the polyolefin having no unit based on the acid anhydride may contain other components in addition to the polyolefin having no unit based on the acid anhydride.

Examples of the other components include a thermoplastic resin other than the polyolefin having a unit based on the acid anhydride. Examples of the thermoplastic resin include thermoplastic polyimides, polyarylates, and polysulfones.

In addition, examples of the other components include an additive such as a heat stabilizer, a filler, a pigment, or an ultraviolet absorber.

The layer containing the polyolefin having the unit based on the acid anhydride is preferably formed by melt extrusion molding a first outer layer-forming composition containing the polyolefin having no unit based on an acid anhydride.

In addition, the layer containing the polyolefin having no unit based on an acid anhydride is preferably formed by melt-extrusion molding a second outer layer-forming composition containing the polyolefin having no unit based on an acid anhydride.

The layer containing the polyolefin having the unit based on the acid anhydride and the layer containing the polyolefin having no unit based on an acid anhydride are preferably formed by coextrusion molding the first outer layer-forming composition and the second outer layer-forming composition.

A content of the polyolefin having the unit based on the acid anhydride in the outer layer is preferably 80% to 100% by mass, more preferably 90% to 100% by mass, and further preferably 95% to 100% by mass, with respect to the total mass of the outer layer.

<Fuel filler pipe>

In the fuel filler pipe of the present invention, a thickness of the inner layer is preferably 0.1 to 0.8 mm, and more preferably 0.2 to 0.5 mm.

In addition, in the fuel filler pipe of the present invention, a thickness of the intermediate layer is preferably 0.1 to 0.5 mm, and more preferably 0.2 to 0.5 mm.

In addition, in the fuel filler pipe of the present invention, a thickness of the outer layer is preferably 0.8 to 5 mm, and more preferably 1.0 to 3.0 mm.

In the fuel filler pipe of the present invention, a total thickness of the inner layer, the intermediate layer, and the outer layer is preferably 1.0 to 20.0 mm.

The thickness of the inner layer is preferably 10% to 30% of the thickness of the outer layer.

The thickness of the intermediate layer is preferably 10% to 30% of the thickness of the outer layer.

In the fuel filler pipe of the present invention, an ester bond is preferably present at both a first interface between the inner layer and the intermediate layer and a second interface between the intermediate layer and the outer layer.

The ester bond is preferably an ester bond formed from an acid anhydride group and a hydroxy group.

The presence of an ester bond at both a first interface and a second interface improves the interlayer adhesion of each of the inner layer, the intermediate layer, and the outer layer.

The presence of the ester bond was determined from an absorption peak of the carbonyl group of the ester bond by IR.

In addition, a peel strength is preferably 30 N/cm or greater and more preferably 40 N/cm or greater at both a first interface between the inner layer and the intermediate layer and a second interface between the intermediate layer and the outer layer.

The peel strength is obtained by cutting a laminated pipe to have a length of 20 cm and further cutting vertically as a test piece. The outer layer and the inner layer were forcibly peeled off by 1 cm from the edge, the outer layer and the inner layer were sandwiched, and a 180° adhesion test was performed at a tensile speed of 50 mm/min by using a TENSILON universal testing machine as equipment. The maximum strength was read from the maximum point of the S-S curve and used as the delamination strength (N/cm).

In addition, in the fuel filler pipe of the present invention, an aspect having no other layer such as an adhesive layer at either of a first interface between the inner layer and the intermediate layer and a second interface between the intermediate layer and the outer layer is also preferable.

In the aspect having another layer such as an adhesive, in some cases, there is a case where the components contained in the other layer are discharged to the fuel, which causes a problem of clogging a filter in front of an engine (blocking the supply of the fuel to the engine), and extreme problems such as clogged activated carbon in a canister that shuts off the fuel (blocking fuel vapor to the outside of a vehicle) and malfunction of valve opening and closing in various transportation lines.

In the fuel filler pipe of the present invention, a fuel permeability coefficient of the inner layer determined at 60 °C, which is a test fuel (hereinafter, also referred to as "CE10") of isooctane:toluene:ethanol (volume ratio) = 45:45:10 by a cup method below is preferably 6.0 g·mm/(m²·24 hr) or less.

(Cup method)

A test piece having a thickness of 100 $\mu$m is prepared. In accordance with the cup method specified in JIS Z 0208: 1976, 4.6 g of a specified test fuel is placed in a cup having a permeation area of 11.33 cm², an upper part of the cup is covered with the test piece, loss in mass after being kept at 60 °C for 10 days is recorded, and the fuel permeability coefficient of a polymer is determined using Equation below.

$$\text{Fuel permeability coefficient} = \text{loss in mass (g)} \times \text{thickness of test piece}$$

$$\text{(mm)/(permeation area (m}^2\text{)} \times \text{number of permeation days).}$$

The fuel permeability coefficient can be lowered by increasing the fluorine content of the ETFE-based copolymer in the inner layer or increasing the crystallinity.

Also, in the fuel filler pipe of the present invention, a surface resistivity of the inner layer after enclosing the CE10 and exposing it to a temperature of 40 °C for 1000 hours is preferably $10^5$ $\Omega$/sq. or lower.

Since a polymer such as an ETFE-based copolymer generally has a high surface resistivity, the surface resistivity can be lowered by adding the above-mentioned conductive filler.

In the inner layer of the fuel filler pipe of the present invention, a retention ratio of tensile breaking strength to initial tensile breaking strength after exposure to an atmospheric temperature of 200 °C for 1000 hours is preferably 55% or higher and more preferably 75% or higher. In addition, in the inner layer of the fuel filler pipe of the present invention, a retention ratio of tensile breaking elongation to initial tensile breaking elongation after exposure to an atmospheric temperature of 200 °C for 1000 hours is preferably 65% or higher and more preferably 75% or higher.

In the inner layer of the fuel filler pipe of the present invention, a retention ratio of tensile breaking strength to initial tensile breaking strength after exposure to an atmospheric temperature of 220 °C for 1000 hours is preferably 70% or higher. In addition, a retention ratio of tensile breaking elongation to initial tensile breaking elongation after exposure to an atmospheric temperature of 220 °C for 1000 hours is preferably 65% or higher.

When exposed to a high temperature such as 200 °C or 220 °C, thermal oxidative deterioration occurs. In order to prevent this thermal oxidative deterioration, for example, in the case of an ETFE-based copolymer, a C-F bond having a high binding energy is increased, specifically, the TFE unit is increased, or an unstable group at the terminal is stabilized. In order to prevent this thermal oxidative deterioration, it is also possible to use a chain transfer agent having a stable terminal at the time of polymerization.

As a method for producing a fuel filler pipe of the present invention, a method (coextrusion method) of melt extrusion using an extruder corresponding to the number of layers or the number of materials and simultaneously laminating inside or outside the die, or a method (coating method) in which a single-layer pipe or a laminated pipe produced by the above method is once produced in advance, and a resin is integrated and laminated on the outside in sequence using an adhesive as needed can be mentioned.

In addition, in a case where the obtained laminated pipe has a complicated shape or is subjected to heat bending after molding to obtain a molded product, in order to remove a residual strain of the molded product, after forming the laminated pipe, it is also possible to obtain a desired molded product by heat treatment for 0.01 to 10 hours at a temperature lower than a lowest melting point of the resins forming the laminated pipe.

The laminated pipe may have a corrugated region. The corrugated region is a region formed in a corrugated shape, a bellows shape, an accordion shape, a corrugated shape, or the like. The corrugated region is not limited to the region formed over the entire length of the laminated pipe, and may be partially formed in an appropriate region in the middle. The corrugated region can be easily formed, for example, by first molding a straight tubular pipe and then molding the pipe to have a predetermined corrugated shape. The laminated pipe has the corrugated region, thereby having shock absorption and becoming easy to attach. Furthermore, for example, it is possible to add necessary parts such as a connector, or to make an L shape, a U shape, or the like by bending.

Considering stone splash, wear with other parts, or flame resistance, epichlorohydrin rubber (ECO); acrylonitrile/butadiene rubber (NBR); a mixture of NBR and polyvinyl chloride; hypalonized polyethylene rubber; chlorinated polyethylene rubber; acrylic rubber (ACM); chloroprene rubber (CR); ethylene/propylene rubber (EPR); ethylene/propylene/diene rubber (EPDM); NBR and EPDM mixture rubber; or a solid or sponge-like protective member (protector) including a thermoplastic elastomer such as one that is vinyl chloride-based, olefin-based, ester-based, or amide-based may be provided on all or part of the outer circumference of the laminated pipe molded in this manner.

The protective member may be made into a sponge-like porous body by a known method. By making the protective member a porous body, a lightweight protective portion having excellent heat insulating properties can be formed. In addition, material costs of the fuel filler pipe of the present invention can be reduced. The strength of the protective member may be improved by adding a reinforcing material such as glass fibers.

A shape of the protective member is not particularly limited, and it is usually a block-shaped member having a recess portion for receiving a tubular member or a laminated pipe. In a case where the protective member is a tubular member, the member can be produced by later inserting a laminated pipe into the tubular member prepared in advance, or by covering and extruding the tubular member on the laminated pipe to bring them into close contact with each other. In order to adhere both the protective member and the laminated pipe, it is necessary to apply an adhesive to an inner surface or a recess surface of the protective member as needed, insert or fit the laminated pipe into the adhesive, and bring them into close contact with each other to form an integrated structure of the laminated pipe and the protective member. In addition, it is also possible to further reinforce the integrated structure with a metal or the like.

In consideration of a flow rate of a fuel such as gasoline, an outer diameter of the laminated pipe is set such that the wall thickness does not increase the permeability of the fuel, can maintain the breaking pressure of the normal pipe, and is designed to be thick enough to maintain a good degree of flexibility for ease of pipe assembly work and vibration resistance during use, but is not limited thereto. The outer diameter of the laminated pipe is preferably 4 to 30 mm, the inner diameter is preferably 3 to 25 mm, and a wall thickness is preferably 0.5 to 5 mm.

EXAMPLES

Hereinafter, the present invention will be specifically described with reference to examples, but the present invention is not limited to the following description.

[Evaluation method]

<MFR>

Unless otherwise specified, MFR was measured under conditions of a temperature of 297 °C and a load of 49 N in accordance with ASTM D3159.

<Melting point (°C)>

A melting point was determined from an endothermic peak when heated to 300 °C at 10 °C/min in an air atmosphere using a scanning differential thermal analyzer (DSC7200, manufactured by SII).

<Content (mol%) of acid anhydride group>

Using a 200 $\mu$m-thick film obtained by press-molding a fluorine-containing copolymer, an intensity of absorption derived from an acid anhydride residue appearing at 1800 to 1900 $cm^{-1}$ by a Fourier transform infrared spectrometer (Nicolet iS10 manufactured by Thermo Fisher Scientific Co., Ltd.) was measured and the content of the acid anhydride was calculated.

<Composition of fluorine-containing copolymer (mol%)>

The composition was calculated from the results of total fluorine amount measurement and molten F-NMR measurement.

<Delamination strength>

A laminated pipe was cut to a length of 20 cm, and the pipe was further cut vertically to obtain a test piece. The outer layer and the inner layer were forcibly peeled off by 1 cm from the edge, the outer layer and the inner layer were sandwiched, and a 180° adhesion test was performed at a tensile speed of 50 mm/min by using a TENSILON universal testing machine as equipment. The maximum strength was read from the maximum point of the S-S curve and used as the delamination strength (N/cm).

<Fuel permeability coefficient>

The fuel permeability coefficient of the fluorine-containing copolymer was measured in accordance with the cup method specified in JIS Z0208. That is, 9.5 to 10 g of fuel (CE10) (isooctane: toluene:ethanol = 45:45:10 in terms of volume ratio) was placed in a cup having a permeation area of 28.26 $cm^2$, an upper part of the cup was covered with a film of the ETFE-based copolymer (A) having a thickness of 100 $\mu$m obtained by press-molding and kept at 60 °C for 10 days, and then the fuel permeability coefficient was determined using the mass loss. The lower the fuel permeability coefficient, the better the fuel barrier property.

<Conductivity>

The conductivity of the laminated pipe was measured in accordance with SAE J-2260.

<Heat aging resistance: tensile strength retention ratio and tensile elongation retention ratio>

The heat aging resistance strength retention ratio is the ratio of the tensile breaking strength to the initial tensile breaking strength after being exposed to an atmospheric temperature of 200 °C or 220 °C for 500 hours or 1000 hours. The heat aging resistance elongation retention ratio is the ratio of tensile breaking elongation to initial tensile breaking elongation after exposure to an atmospheric temperature of 200 °C or 220 °C for 500 hours or 1000 hours.

· Measurement method: A test method in which the strength and elongation at break are expressed by the aging rate with respect to initial values by a tensile test according to ASTM D638.
· Measurement test piece: Type-V shape dumbbell described in ASTM D638, tensile speed: 50 mm/min

(Material used)

1. (D) Polyethylene for outermost layer

D-1: Made of prime polymer (high-density polyethylene)

Grade name: Hizex 5600B, Density: 0.935 (g/cm$^3$) MFR: 0.45 (g/10 min): Measurement temperature 190 °C
Grade name: Hizex 6700B, Density: 0.958 (g/cm$^3$) MFR: 0.4 (g/10 min) at 190 °C * 2.16 kgf
· Manufactured by Japan Polyethylene Corporation Grade name: Novatec HD HB420R, Density = 0.956 g/cm$^3$, MFR = 0.2 (g/10 min) at 190 °C *2.16 kgf

2. (C) For outer layer: Acid anhydride-modified polyethylene

C-1: Manufactured by Japan Polyethylene Corporation (maleic anhydride graft copolymerized high-density polyethylene)

Grade name: ADTEX DU1022N Tm: 128 °C MFR: 25 (190 °C* 2.16 kgf)

3. (B) For intermediate layer: EVOH

B-1: Manufactured by Kuraray EVAL LA170B Ethylene content of 27 mol%, saponification degree: 99% or more, Tm: 191 °C MFR: 2.1 (210 °C * 2.16 kgf)

4. (A) For inner layer: Conductive ETFE composition to which an ETFE-based copolymer and a conductive filler are added

In Examples 1 and 2, a conductive ETFE composition (A-2) using an ETFE-based copolymer (A-1) was used as an inner layer.
In Example 3, a conductive ETFE composition (A-4) using an ETFE-based copolymer (A-3) was used as an inner layer.
In Example 4, a conductive ETFE composition (A-6) using an ETFE-based copolymer (A-5) was used as an inner layer.
In Example 5, the ETFE-based copolymer (A-1) was used as the inner layer.
In Comparative Example 1, a conductive composition (A-8) using a polymer (A-7) that was not the ETFE-based copolymer of the present invention was used as an inner layer.

Production of ETFE-based copolymer (A-1)

A polymerization tank with a stirring blade having an internal volume of 94 L was degassed, 71.3 kg of 1-hydrotridecafluorohexane, 20.4 kg of 1,3-dichloro-1,1,2,2,3-pentafluoro (AK225cb, manufactured by AGC, hereinafter referred to as AK225cb), which is a chain transfer agent, 562 g of $CH_2=CH(CF_2)_2F$, and 4.45 g of itaconic anhydride(IAN) were charged, a temperature inside the polymerization tank was raised to 66 °C, and the pressure was increased to 1.5 MPa/G with a gas of TFE/E (molar ratio: 89/11). As a polymerization initiator, 1 L of a 0.7% -hydrotridecafluorohexane solution of tert-butylperoxypivalate was charged to initiate polymerization.

A monomer mixed gas of TFE/E (molar ratio: 59.5/40.5) was continuously charged so that the pressure during polymerization became constant. In addition, $CH_2=CH(CF_2)_2F$ in an amount corresponding to 3.3 mol% and IAN in an amount corresponding to 0.8 mol% with respect to a total number of moles of the TFE and E charged in the polymerization were continuously charged with a 1% solution of the AK225cb. 9.9 hours after the start of the polymerization, from the viewpoint of 7.28 kg of the monomer mixed gas was charged, the temperature inside the polymerization tank was lowered to room temperature and purged to normal pressure.

The obtained slurry-like fluorine-containing copolymer was put into a 200 L granulation tank charged with 77 kg of water, heated to 105 °C with stirring, and granulated while distilling off the solvent. The obtained granulated product was dried at 150 °C for 15 hours to obtain 6.9 kg of a granulated product of a fluorine-containing copolymer.

The composition of the obtained fluorine-containing copolymer had a molar ratio of polymerization unit based on TFE/polymerization unit based on E/polymerization unit based on IAN/polymerization unit based on $CH_2=CH(CF_2)_2$ of 57.2/38.5/0.48/3.5. In addition, the melting point was 230 °C.

This granulated product was melted at 280 °C with a residence time of 2 minutes using an extruder to obtain pellets of a fluorine-containing copolymer. Hereinafter, the ETFE-based copolymer is referred to as (A-1).

Production of conductive ETFE composition (A-2)

100 parts by mass of the ETFE-based copolymer (A-1) and 17 parts by mass of carbon black (manufactured by Electrochemical Co., Ltd.) were mixed in advance, supplied to a twin-screw melt kneader (manufactured by Toshiba Machine Co., Ltd., model: TEM-48SS), and melt-kneaded at a cylinder temperature of 240 °C to 300 °C, the molten resin was extruded into a strand shape, and then introduced into a water tank, the discharged strands were water-cooled, and the strands were cut with a pelletizer, and dried in a dryer at 120 °C for 10 hours for removing water to obtain pellets of a conductive fluorine-containing copolymer. Hereinafter, this conductive ETFE composition is referred to as (A-2).

Production of ETFE-based copolymer (A-3)

A granulated product of the fluorine-containing copolymer was obtained in the same manner as the ETFE-based copolymer (A-1).

The composition of the obtained fluorine-containing copolymer had a molar ratio of polymerization unit based on TFE/polymerization unit based on E/polymerization unit based on IAN/polymerization unit based on $CH_2=CH(CF_2)_4F$ of 57.2/38.5/0.43/3.3. In addition, the melting point was 225 °C.

The granulated product was subjected to the same process as in the ETFE-based copolymer (A-1) to obtain pellets of the ETFE-based copolymer. Hereinafter, the ETFE-based copolymer is referred to as (A-3).

Production of conductive ETFE composition (A-4)

In the production of the conductive ETFE composition (A-2), pellets of the conductive fluorine-containing copolymer were obtained in the same manner, except that the ETFE-based copolymer (A-1) was changed to the ETFE-based copolymer (A-3). Hereinafter, this conductive ETFE composition is referred to as (A-4).

Production of ETFE-based copolymer (A-5)

After vacuuming a stainless steel polymerization tank equipped with a stirrer and a jacket with an internal volume of 1.2 L (liters), 1180 g of $CF_3CH_2OCF_2CF_2H$, 5.7 g of methanol, and 7.0 g of $CH_2=CH(CF_2)_2F$ were charged, and while stirring the inside of the polymerization tank, 177 g of TFE, and 6.1 g of E were charged thereinto, and the temperature inside the polymerization tank was set to 66 °C by flowing hot water through the jacket. A pressure in the polymerization tank at this time was 1.54 MPaG. After the internal temperature was stable, 9 mL of 2% by mass of $CF_3CH_2OCF_2CF_2H$ solution of tert-butyl peroxypivalate was pressed to initiate polymerization. During the polymerization, a mixed gas having a TFE/E=60/40 molar ratio was added so that the internal pressure became constant at 1.54 MPaG. At the same time, every time 10 g of the TFE/E mixed gas added during the polymerization was consumed, 0.6 mL of $CH_2=CH(CF_2)_2F$ was added, and every time 5 g of the TFE/E mixed gas was consumed, 2 mL of a 1.8% by mass $CF_3CH_2OCF_2CF_2H$ solution of itaconic anhydride was added. The saturated solubility of itaconic anhydride at 25 °C with respect to $CF_3CH_2OCF_2CF_2H$ was 5% by mass. 240 minutes after the start of the reaction, the polymerization tank was cooled when 100 g of a mixed gas having a molar ratio of TFE/E = 60/40 was added, and the polymerization was completed.

Thereafter, a residual monomer gas was purged from the polymerization tank to atmospheric pressure, slurry was transferred to a container having an internal volume of 2 L, water having the same volume as the slurry was added, and the polymer was separated from the polymerization medium, the chain transfer agent, and the residual monomer, while heating (30 °C to 90 °C). The obtained polymer was dried in an oven at 150 °C to obtain a white powdery polymer. The composition of the polymer was TFE/E/CH$_2$=CH(CF$_2$)$_2$F/itaconic anhydride = 54.8/42.6/2.2/0.4 mol%, and a melting point was 239 °C.

The granulated product was subjected to the same process as the ETFE-based copolymer (A-1) to obtain pellets of the fluorine-containing copolymer. Hereinafter, the ETFE-based copolymer is referred to as (A-5).

Production of conductive ETFE composition (A-6)

In the production of the conductive ETFE composition (A-2), pellets of the conductive fluorine-containing copolymer were obtained in the same manner, except that the ETFE-based copolymer (A-1) was changed to the ETFE-based copolymer (A-5). Hereinafter, this conductive ETFE composition is referred to as (A-6).

Production of polymer (A-7)

A granulated product of the fluorine-containing copolymer was obtained in the same manner as the ETFE-based copolymer (A-1), except that CH$_2$=CH(CF$_2$)$_2$F in an amount corresponding to 3.3 mol% with respect to with respect to total moles of the TFE and E charged in the polymerization was changed to CH$_2$=CH(CF$_2$)$_2$F in an amount corresponding to 0.8 mol% and IAN in an amount corresponding to 0.8 mol% was changed to IAN in an amount of corresponding to 0.5 mol%.

The composition of the obtained fluorine-containing copolymer had a molar ratio of polymerization unit based on TFE/polymerization unit based on E/polymerization unit based on IAN/polymerization unit based on CH$_2$=CH(CF$_2$)$_4$F of 58.6/40.1/0.3/0.6. In addition, the melting point was 255 °C.

The granulated product was subjected to the same process as the ETFE-based copolymer (A-1) to obtain pellets of the ETFE-based copolymer. Hereinafter, this polymer is referred to as (A-7).

Production of conductive composition (A-8)

100 parts by mass of the (A-7) ETFE-based copolymer and 17 parts by mass of carbon black (manufactured by Electrochemical Co., Ltd.) were mixed in advance, supplied to a twin-screw melt kneader (manufactured by Toshiba Machine Co., Ltd., model: TEM-48SS), and melt-kneaded at a cylinder temperature of 260 °C to 320 °C, the molten resin was extruded into a strand shape, and then introduced into a water tank, the discharged strands were water-cooled, and the strands were cut with a pelletizer, and dried in a dryer at 120 °C for 10 hours for removing water to obtain pellets of a conductive fluorine-containing copolymer. Hereinafter, this conductive composition is referred to as (A-8).

[Example 1]

Using (A) the conductive ETFE composition (A-2), (B) EVOH (B-1), (C) acid anhydride-modified polyethylene (C-1), and (D) high-density polyethylene (D-1) shown above, a corrugator machine manufactured by Mirai Seiko Co., Ltd. was attached to the outlet of a 4-layer pipe molding machine manufactured by Plastic Engineering Laboratory Co., Ltd., and molded into a 4-layered bellows shape including a straight part.

(A) was melted at an extrusion temperature of 300 °C, (B) was melted at an extrusion temperature of 240 °C, (C) was melted at an extrusion temperature of 230 °C, and (D) was melted at an extrusion temperature of 240 °C, and using a corrugator machine composed of a bellows-shaped mold, the molten resin in which the discharged molten resin was laminated using a coextrusion pipe die, and a laminated pipe having a layer configuration when (a) layer (inner layer) including (A) the ETFE-based copolymer, (b) a layer including (B) EVOH, (c) a layer including (C) acid anhydride-modified polyethylene, and a layer including (D) high-density polyethylene were formed of (a)/(b)/(c)/(d)=0.2/0.3/0.2/2.2 mm and having an inner diameter of 29 mm and an outer diameter of 35 mm was obtained.

Table 1 shows the results of measuring the physical characteristics of the obtained laminated pipe.

[Example 2]

Using (A) the conductive ETFE composition (A-2), (B) EVOH (B-1), and (C) acid anhydride-modified polyethylene (C-1) shown above, a corrugator machine manufactured by Mirai Seiko Co., Ltd. was attached to the outlet of a 3-layer pipe molding machine manufactured by Plastic Engineering Laboratory Co., Ltd., and molded into a 4-layered bellows shape including a straight part.

(A) was melted at an extrusion temperature of 300 °C, (B) was melted at an extrusion temperature of 240 °C, and (C) was melted at an extrusion temperature of 230 °C, and using a corrugator machine composed of a bellows-shaped mold, the molten resin in which the discharged molten resin was laminated using a coextrusion pipe die, and a laminated pipe having a layer configuration when (a) layer (inner layer) including (A) ETFE-based copolymer, (b) layer including (B) EVOH, and (c) layer including (C) acid anhydride-modified polyethylene were formed of (a)/(b)/(c)=0.2/0.3/2.5 mm and having an inner diameter of 29 mm and an outer diameter of 35 mm was obtained.
Table 1 shows the results of measuring the physical characteristics of the obtained laminated pipe.

[Example 3]

A laminated pipe having the layer configuration shown in Table 1 was obtained in the same manner as in Example 1 except that (A) the conductive ETFE composition (A-2) was changed to (A-4) in Example 2.
Table 1 shows the results of measuring the physical characteristics of the obtained laminated pipe.

[Example 4]

A laminated pipe having the layer configuration shown in Table 1 was obtained in the same manner as in Example 1 except that (A) the conductive ETFE composition (A-2) was changed to (A-6) in Example 2.
Table 1 shows the results of measuring the physical characteristics of the obtained laminated pipe.

[Example 5]

A three-layer laminated pipe was molded using a cooling tank with sizing for a straight pipe having no bellows shape instead of the corrugator machine in Example 2. At that time, a laminated pipe having a layer configuration when (a) layer (inner layer) including (A) ETFE-based copolymer, (b) layer including (B) EVOH, and (c) layer including (C) acid anhydride-modified polyethylene were formed of (a)/(b)/(c)=0.18/0.27/1.55 mm and having an inner diameter of 12 mm and an outer diameter of 16 mm was obtained.
Table 1 shows the results of measuring the physical characteristics of the obtained laminated pipe.

[Comparative Example 1]

A laminated pipe having the layer configuration shown in Table 1 was obtained in the same manner as in Example 1 except that (A) the conductive ETFE composition (A-2) was changed to (A-8) in Example 1.
Table 1 shows the results of measuring the physical characteristics of the obtained laminated pipe.

[Table 1]

| | Adhesion | | Conductivity | |
| | Inner layer/intermediate layer [N/cm] | Intermediate layer/outer layer [N/cm] | Before exposure of CE10 [Ω/sq.] | After exposure of CE10 [Ω/sq.] |
|---|---|---|---|---|
| Example 1 | 50.8 | 42.9 | $6.5 \times 10^3$ | $7.5 \times 10^3$ |
| Example 2 | 51.4 | 43.1 | $8.5 \times 10^3$ | $1.8 \times 10^4$ |
| Example 3 | 58.2 | 48.5 | $1.2 \times 10^4$ | $3.2 \times 10^4$ |
| Example 4 | 46.7 | 42.4 | $7.8 \times 10^3$ | $9.1 \times 10^3$ |
| Example 5 | 42.1 | 39.7 | ND | ND |
| Comparative Example 1 | NA | NA | NA | NA |

Table 2 shows the results of heat aging resistance and fuel permeability of the inner layer.

[Table 2]

| | Heat aging resistance | | Fuel permeability |
|---|---|---|---|
| | Tensile breaking elongation retention ratio [%] | Tensile breaking strength retention ratio [%] | $[g \cdot mm/(m^2 \cdot 24\ hr)]$ |
| Example 1 | 55.8 | 65.2 | 2.1 |
| Example 2 | 55.8 | 65.2 | 2.1 |
| Example 3 | 52.5 | 59.8 | 3.8 |
| Example 4 | 85.6 | 84.1 | 2.0 |
| Example 5 | 57.2 | 67.2 | 2.1 |
| Comparative Example 1 | 55.8 | 65.2 | 2.1 |

**Claims**

1. A fuel filler pipe comprising:

   an inner layer that contains a fluorine-containing copolymer having a unit based on tetrafluoroethylene and a unit based on ethylene, having a carbonyl group-containing group, and having a melting point of 250 °C or lower;
   an intermediate layer that contains a non-fluorine copolymer having a unit based on ethylene and a unit based on vinyl alcohol; and
   an outer layer that contains a polyolefin,
   wherein the inner layer, the intermediate layer, and the outer layer are directly laminated in that order, and
   the outer layer is a layer that contains a polyolefin having a unit based on an acid anhydride or is a layer in which a layer that contains a polyolefin having a unit based on an acid anhydride and a layer that contains a polyolefin having no unit based on an acid anhydride are directly laminated.

2. The fuel filler pipe according to Claim 1,
   wherein the carbonyl group-containing group contained in the fluorine-containing copolymer is a carbonyl group-containing group derived from a unit based on a monomer having a carbonyl group-containing group.

3. The fuel filler pipe according to Claim 1,
   wherein the carbonyl group-containing group contained in the fluorine-containing copolymer is an acid anhydride group derived from a unit based on a monomer having an acid anhydride group.

4. The fuel filler pipe according to Claim 1,

   wherein the fluorine-containing copolymer is contained in an amount of 80% to 100% by mass with respect to a total mass of the inner layer,
   the non-fluorine copolymer is contained in an amount of 80% to 100% by mass with respect to a total mass of the intermediate layer, and
   the polyolefin is contained in an amount of 80% to 100% by mass with respect to a total mass of the outer layer.

5. The fuel filler pipe according to Claim 1,
   wherein the inner layer contains a conductive filler.

6. The fuel filler pipe according to Claim 5,
   wherein a surface resistivity of the inner layer is $10^5$ Ω/sq. or lower.

7. The fuel filler pipe according to Claim 1,
   wherein a surface resistivity of the inner layer is $10^5$ Ω/sq. or lower.

8. The fuel filler pipe according to Claim 1,
   wherein, in the intermediate layer, the non-fluorine copolymer contains 25 to 50 mol% of a unit based on ethylene with respect to a total unit forming the non-fluorine copolymer.

9. The fuel filler pipe according to Claim 1,
wherein, in the intermediate layer, the unit based on vinyl alcohol forming the non-fluorine copolymer is obtained by saponifying 99% or more of a unit based on vinyl acetate.

10. The fuel filler pipe according to Claim 1,
wherein a total thickness of the inner layer, the intermediate layer, and the outer layer is 1.0 to 20.0 mm.

11. The fuel filler pipe according to Claim 10,
wherein a thickness of the inner layer is 10% to 30% of a thickness of the outer layer.

12. The fuel filler pipe according to Claim 11,
wherein a thickness of the intermediate layer is 10% to 30% of the thickness of the outer layer.

13. The fuel filler pipe according to Claim 1,
wherein an ester bond is present at both a first interface between the inner layer and the intermediate layer and a second interface between the intermediate layer and the outer layer.

14. The fuel filler pipe according to Claim 13,
wherein the ester bond is an ester bond formed from an acid anhydride group and a hydroxy group.

15. The fuel filler pipe according to Claim 1,
wherein a peel strength is 30 N/cm or greater at both a first interface between the inner layer and the intermediate layer and a second interface between the intermediate layer and the outer layer.

16. The fuel filler pipe according to Claim 1,

wherein a fuel permeability coefficient of the inner layer determined using CE10 at 60 °C, which is a test fuel of isooctane:toluene:ethanol (volume ratio) = 45:45:10 by a cup method below, is 6.0 g·mm/(m$^2$·24 hr) or less,
(cup method)
a test piece having a thickness of 100 $\mu$m is prepared, and
in accordance with the cup method specified in JIS Z 0208-1976, 4.6 g of a specified test fuel is placed in a cup having a permeation area of 11.33 cm$^2$, an upper part of the cup is covered with the test piece, loss in mass after being kept at 60 °C for 10 days is recorded, and the fuel permeability coefficient of a polymer is determined using the following equation,

$$\text{Fuel permeability coefficient} = \text{loss in mass (g)} \times \text{thickness of test piece}$$

$$\text{(mm)/(permeation area (m}^2\text{)} \times \text{number of permeation days).}$$

17. The fuel filler pipe according to Claim 1,
wherein a surface resistivity of the inner layer after enclosing the CE10, which is a test fuel of isooctane:toluene:ethanol (volume ratio) = 45:45:10, and exposure at a temperature of 40 °C for 1000 hours is 10$^5$ $\Omega$/sq. or lower.

18. The fuel filler pipe according to Claim 1,
wherein a peel strength is 40 N/cm or greater at both a first interface between the inner layer and the intermediate layer and a second interface between the intermediate layer and the outer layer.

19. The fuel filler pipe according to Claim 1,
wherein, in the inner layer, a retention ratio of tensile breaking strength to initial tensile breaking strength after exposure to an atmospheric temperature of 200 °C for 1000 hours is 75% or higher.

20. The fuel filler pipe according to Claim 1,
wherein, in the inner layer, a retention ratio of tensile breaking elongation to initial tensile breaking elongation after exposure to an atmospheric temperature of 200 °C for 1000 hours is 75% or higher.

21. The fuel filler pipe according to Claim 1,
wherein, in the inner layer, a retention ratio of tensile breaking strength to initial tensile breaking strength after exposure to an atmospheric temperature of 220 °C for 1000 hours is 70% or higher.

22. The fuel filler pipe according to Claim 1,
    wherein, in the inner layer, a retention ratio of tensile breaking elongation to initial tensile breaking elongation after exposure to an atmospheric temperature of 220 °C for 1000 hours is 65% or higher.

## INTERNATIONAL SEARCH REPORT

| International application No. |
|---|
| **PCT/JP2022/021116** |

**A.    CLASSIFICATION OF SUBJECT MATTER**

**_B60K 15/04_**(2006.01)i
FI:   B60K15/04 C

According to International Patent Classification (IPC) or to both national classification and IPC

**B.    FIELDS SEARCHED**

Minimum documentation searched (classification system followed by classification symbols)

B60K15/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2010-234777 A (DAIKIN IND., LTD.) 21 October 2010 (2010-10-21) claims 1, 4, 6-7, fig. 1 | 1-22 |
| A | JP 2016-49764 A (ASAHI GLASS CO., LTD.) 11 April 2016 (2016-04-11) entire text | 1-22 |
| A | WO 2016/195042 A1 (ASAHI GLASS CO., LTD.) 08 December 2016 (2016-12-08) entire text | 1-22 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 July 2022** | **19 July 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

| | International application No. |
|---|---|
| | **PCT/JP2022/021116** |

| Patent document cited in search report | Publication date (day/month/year) | Patent family member(s) | Publication date (day/month/year) |
|---|---|---|---|
| JP 2010-234777 A | 21 October 2010 | (Family: none) | |
| JP 2016-49764 A | 11 April 2016 | (Family: none) | |
| WO 2016/195042 A1 | 08 December 2016 | US 2018/0038523 A1 EP 3305523 A1 CN 107635771 A | |

Form PCT/ISA/210 (patent family annex) (January 2015)

**REFERENCES CITED IN THE DESCRIPTION**

**Patent documents cited in the description**

- US 8133561 B